# FASCICULE DE BREVET EUROPEEN

(11) **EP 1 216 378 B1**
(45) Date de publication et mention de la délivrance du brevet: **28.01.2004**
(21) Numéro de dépôt: 00964365.1
(22) Date de dépôt: 26.09.2000
(51) Int. Cl.: F16L 23/16, F16L 23/04

(54) **SYSTEME DE RACCORDEMENT DE DEUX EMBOUTS DE TUBES**
VERBINDUNGSANORDNUNG VON ZWEI ROHRENDEN
SYSTEM FOR CONNECTING TWO CONNECTION PIECES OF TUBES

(30) Priorité: 01.10.1999 FR 9912272
(43) Date de publication de la demande: 26.06.2002
(73) Titulaire: Sabatier, André, F-94190 Villeneuve Saint-Georges (FR); Depraetere, Raymond, F-91000 Evry (FR)
(72) Inventeur: DUPONT, Georges, F-92130 Issy-les-Moulineaux (FR)
(74) Mandataire: Flavenot, Bernard
(86) Numéro de dépôt international: PCT/FR2000/002649
(87) Numéro de publication internationale: WO 2001/025668

(56) Documents cités:
- EP-A- 0 392 901
- WO-A-93/17268
- DE-A- 3 105 395
- FR-A- 1 437 671

## Description

La présente invention concerne les systèmes de raccordement de deux embouts de tubes de révolution autour d'un axe, d'un diamètre extérieur de valeur D et comportant chacun un canal intérieur longitudinal avantageusement métallique, le raccordement de ces deux embouts se faisant par leurs d'un diamètre de valeur d inférieure à la valeur D, les embouts étant réalisés dans un premier matériau extrémités pour ne former, avec les deux canaux, qu'un seul canal étanche, systèmes de raccordement qui trouvent une application particulièrement avantageuse pour le raccordement de tubes ou analogues comme des conduits, tuyauteries, etc. destinés à véhiculer des fluides de tous types, industriels, chimiques, pharmaceutiques, alimentaires, etc., essentiellement des fluides de grande pureté.

Il est déjà connu des systèmes de raccordement de deux embouts de tubes de révolution autour d'un axe, d'un diamètre extérieur de valeur D et comportant chacun un canal intérieur longitudinal d'un diamètre de valeur d inférieure à D, les embouts étant réalisés dans un premier matériau avantageusement métallique, le raccordement de ces deux embouts se faisant par leurs extrémités pour ne former, avec les deux canaux, qu'un seul canal étanche, par exemple des systèmes de raccordement comme ceux décrits et illustrés dans les documents GB-A-1258305, DE-A-2819921, US-A-4218080, et EP-A-0392901.

Il est aussi connu un système de raccordement de tubes comme celui qui est décrit dans le WO/93 17268 qui présente des avantages sur ceux selon les documents référencés ci-dessus.

Tous ces systèmes de raccordement donnent de bons résultats quant à l'étanchéité du raccordement de deux tubes ou analogues mais ils ne résolvent pas le problème des éventuelles cavités qui peuvent se former latéralement au raccordement des deux tubes.

En effet, quand deux embouts de tubes sont raccordés selon les techniques décrites dans ces systèmes de l'art antérieur, il n'est pas possible d'obtenir un canal intérieur avec une paroi parfaitement continue au niveau du raccordement et il peut exister des cavités, c'est-à-dire des volumes morts, qui, pour la plupart des fluides qui sont véhiculés, n'ont aucune incidence. En revanche, quand le fluide véhiculé est d'une grande pureté et doit le demeurer, une certaine quantité de ce fluide peut rester piégée dans ces cavités latérales, au risque, dans le temps, de se décomposer et de polluer le fluide qui continue à passer dans le tube au niveau de ces cavités.

Aussi, la présente invention a-t-elle pour but de réaliser un système de raccordement de deux embouts de tubes qui pallie les inconvénients des systèmes de raccordement connus de l'art antérieur et qui limite au maximum le risque de la présence, au niveau du raccordement dans la paroi du canal obtenu, de cavités ou volumes morts susceptibles de piéger de façon durable du fluide véhiculé dans le canal.

Plus précisément, la présente invention a pour objet un système de raccordement de deux embouts de tubes de révolution autour d'un axe, d'un diamètre extérieur de valeur **D** et comportant chacun un canal intérieur longitudinal d'un diamètre de valeur **d** inférieure à la valeur **D**, les embouts étant réalisés dans un premier matériau, le raccordement de ces deux embouts se faisant par leurs extrémités pour ne former, avec les deux canaux, qu'un seul canal étanche, l'extrémité de chaque embout étant conformée en biseau annulaire centré sur l'axe, les deux arêtes circulaires, respectivement des deux biseaux, étant définies sur la surface de la paroi des canaux des embouts et ayant un diamètre de valeur **d**, les deux embouts étant aboutés de façon que les deux arêtes circulaires soient au contact l'une de l'autre et confondues, système de raccordement comportant des moyens pour appliquer des forces antagonistes, respectivement sur chaque embout lorsqu'ils sont aboutés par les deux arêtes circulaires au contact l'une de l'autre et confondues, cesdits derniers moyens étant agencés de façon qu'il se produise une liaison moléculaire dans la matière au niveau des deux arêtes pour assurer une étanchéité du canal unique qui se forme avec les deux canaux des deux embouts ainsi raccordés, caractérisé par le fait que les moyens pour appliquer des forces antagonistes sur les embouts aboutés comportent :
- une bride sensiblement annulaire de révolution située sur chaque embout, la face de chaque bride la plus éloignée de l'extrémité de l'embout auquel la bride est associée étant oblique par rapport à l'axe, les deux brides définissant, quand les deux embouts sont aboutés, une couronne annulaire en deux parties espacées l'une de l'autre, cette couronne ayant une section axiale en forme de trapèze isocèle dont la grande base est située sur la paroi latérale des deux embouts,
- au moins deux cavaliers, chaque cavalier comportant une gorge annulaire définie dans un plan axial, la section de ladite gorge étant sensiblement complémentaire de la section trapézoïdale de la couronne, la section trapézoïdale de cette gorge ayant une grande base inférieure à la grande base de la section trapézoïdale de la couronne et une petite base inférieure à la petite base de cette même section trapézoïdale de la couronne, et
- des moyens pour appliquer des forces opposées respectivement sur les deux cavaliers pour tendre à les rapprocher l'un de l'autre suivant une direction perpendiculaire à l'axe de révolution lorsqu'ils sont montés par emboîtement femelle- mâle sur la couronne définie par les deux brides.

D'autres caractéristiques et avantages de l'invention apparaîtront au cours de la description suivante donnée en regard des dessins annexés à titre illustratif mais nullement limitatif, dans lesquels :
La figure 1 représente le schéma de principe du système de raccordement de deux embouts de tubes selon l'invention,
Les figures 2 à 4 représentent un premier mode de réalisation du système de raccordement selon l'invention en accord avec le schéma de la figure 1, la figure 2 étant une vue en coupe longitudinale, les figures 3 et 4 étant respectivement une vue de dessus et une vue de côté,
La figure 5 représente une vue en coupe partielle longitudinale d'un second mode de réalisation du système de raccordement selon l'invention en accord avec le schéma de la figure 1,
Les figures 6 et 7 représentent deux vues en coupe longitudinales de détails de certains éléments du système de raccordement selon l'invention, permettant d'expliciter certaines des caractéristiques structurelles de ce système de raccordement, et
La figure 8 représente un schéma permettant d'expliciter l'un des résultats obtenus avec le système de raccordement selon l'invention.

Il est tout d'abord précisé que, sur l'ensemble des figures, les mêmes références désignent les mêmes éléments, quelle que soit la figure sur laquelle elles apparaissent et quel que soit le mode de représentation de ces éléments.

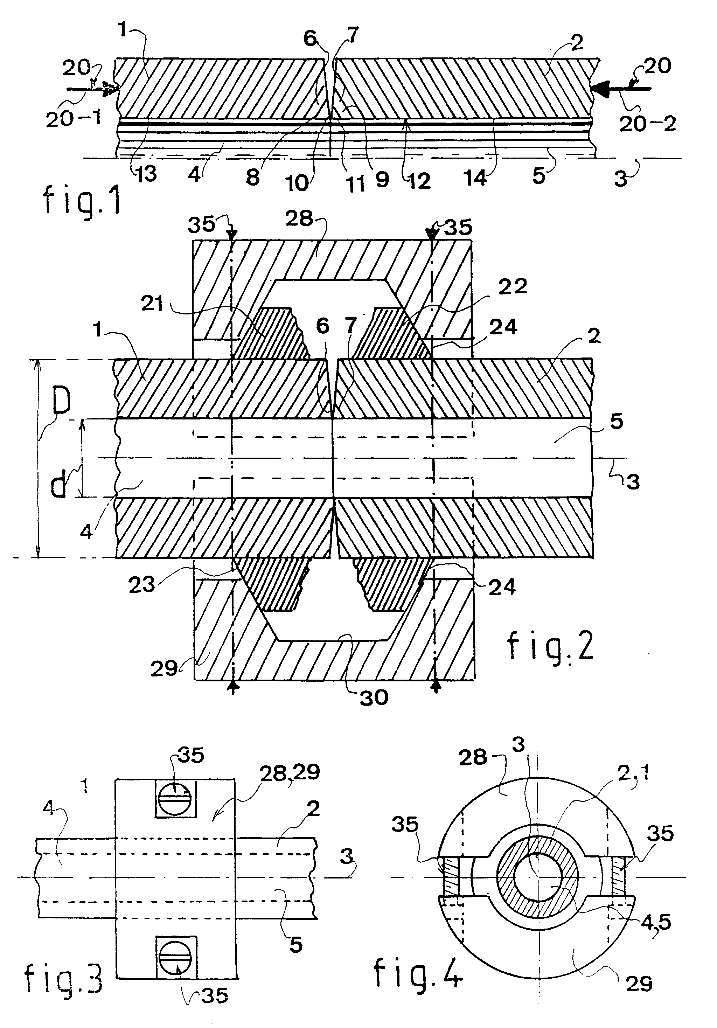

La figure 1 représente le schéma de principe du système selon l'invention permettant le raccordement de deux embouts 1, 2 de deux tubes de révolution autour d'un axe 3, d'un diamètre extérieur de valeur **D** et comportant chacun un canal intérieur longitudinal 4, 5 d'un diamètre de valeur **d** inférieure à la valeur **D**, figure 2.

Les embouts 1, 2 sont réalisés dans un premier matériau, par exemple métallique, et leur raccordement se fait par leurs extrémités 6, 7, comme dans l'art antérieur, pour ne former, avec les deux canaux 4, 5, qu'un seul canal étanche.

En revanche, selon une caractéristique importante de l'invention, l'extrémité 6, 7 de chaque embout 1, 2 est conformée en biseau annulaire 8, 9 centré sur l'axe 3, les deux arêtes circulaires 10, 11, respectivement des deux biseaux 8, 9, étant définies sur la surface 12 de la paroi 13, 14 des canaux 4, 5 des embouts 1, 2 et ayant de ce fait un diamètre de la valeur **d** définie ci-dessus, les deux embouts 1, 2 étant aboutés de façon que les deux arêtes circulaires 10, 11 soient au contact l'une de l'autre et confondues.

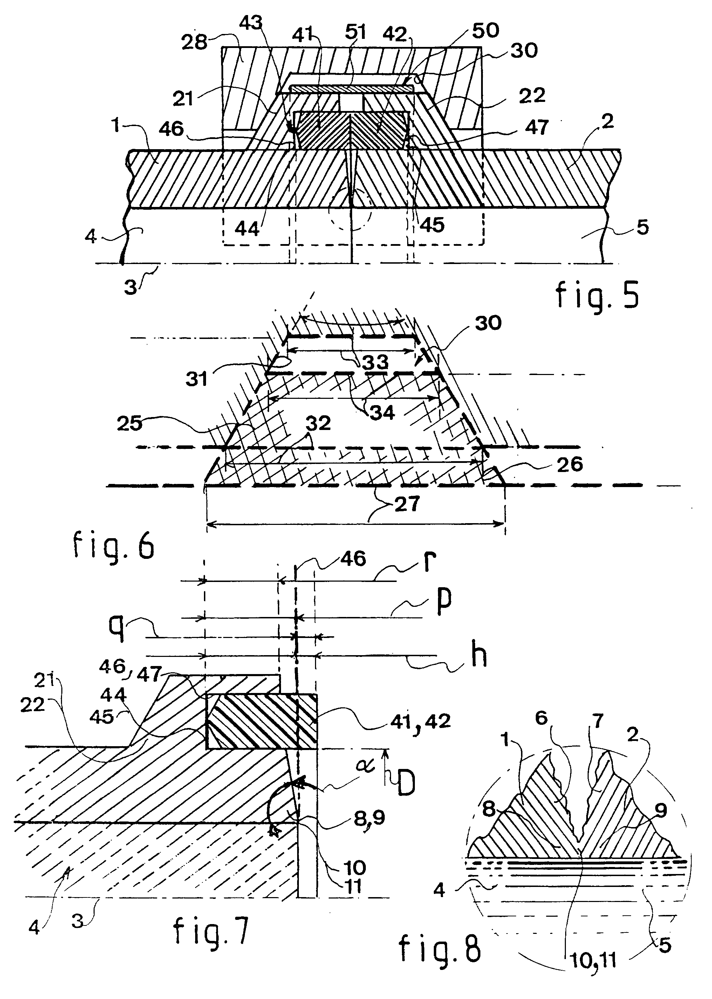

Dans une réalisation qui a donné toute satisfaction au Demandeur, l'angle au sommet α, figure 7, de chaque biseau 8, 9 avait une valeur de l'ordre de quatre-vingt-neuf degrés, créant ainsi, entre les deux biseaux quand les deux embouts sont aboutés, un espace angulaire de deux degrés.

Le système de raccordement comporte des moyens 20, représentés symboliquement sur la figure 1 par deux flèches opposées, pour appliquer des forces antagonistes 20-1 et 20-2, respectivement sur chaque embout 1, 2 lorsqu'ils sont aboutés comme défini ci-dessus, c'est-à-dire par les deux arêtes circulaires 10, 11 au contact l'une de l'autre et confondues, ces derniers moyens 20 étant en outre agencés de façon qu'il se produise une liaison moléculaire dans la matière au niveau des deux arêtes 10, 11 pour assurer une parfaite étanchéité de la paroi du canal unique formé avec les deux canaux 4, 5 des deux embouts ainsi raccordés.

De cette façon, le raccordement est parfaitement effectué au niveau de la surface 12 des parois 13 et 14 respectivement des deux canaux 4 et 5 et, comme ils sont de même diamètre, la paroi 12 présente alors une continuité parfaite (figure 8), limitant ainsi au maximum le risque de la présence, dans cette paroi, de cavités latérales ou volumes morts comme explicité au préambule de la présente description.

En outre, en réalisant le raccordement par des arêtes en biseau, la surface de contact entre les deux arêtes est très faible et la liaison moléculaire définie ci-avant peut s'effectuer sans difficulté avec des forces antagonistes 20-1 et 20-2 de relativement faible amplitude.

Selon l'invention, comme plus particulièrement illustré sur les figures 2 à 4 et partiellement sur les figures 5 et 7, les moyens 20 pour appliquer des forces antagonistes sur les embouts 1, 2 aboutés comportent une bride 21, 22 sensiblement annulaire de révolution située sur chaque embout 1, 2, la face 23, 24 de chaque bride la plus éloignée de l'extrémité 6, 7 de l'embout auquel la bride est associée étant oblique par rapport à l'axe 3. Les deux brides 21, 22 définissent ainsi entre elles, quand les deux embouts sont aboutés, une couronne annulaire 25, figure 6, en deux parties espacées l'une de l'autre, cette couronne ayant une section axiale en forme de trapèze isocèle 26, figure 6, dont la grande base 27 est située sur la paroi latérale des deux embouts.

Les moyens 20 pour appliquer les forces antagonistes comportent en outre au moins deux cavaliers 28, 29, chaque cavalier comportant une gorge annulaire 30, la section 31, figure 6, de chaque gorge étant sensiblement complémentaire de la section trapézoïdale 26 de la couronne 25, la section trapézoïdale 31 de cette gorge 30 ayant une grande base 32 inférieure à la grande base 27 de la section trapézoïdale 26 de la couronne 25 et une petite base 33 inférieure à la petite base 34 de cette même section trapézoïdale de la couronne, et des moyens 35 pour appliquer des forces opposées respectivement sur les deux cavaliers 28, 29 pour tendre à les rapprocher l'un de l'autre suivant une direction perpendiculaire à l'axe de révolution 3 lorsqu'ils sont montés par emboîtement femelle-mâle sur la couronne 25 définie par les deux brides 21, 22. Ces derniers moyens 35 peuvent être constitués de différentes façons, notamment comme illustré sur les figures 2 à 4, par des vis ou analogues qui relient les deux cavaliers 28, 29 et qui, lorsqu'elles sont vissées, tendent à rapprocher en force ces deux cavaliers pour forcer l'emboîtement conique de la couronne 25 dans la gorge 30.

Après que les deux embouts 1 et 2 aient été aboutés comme mentionné auparavant, c'est-à-dire de façon que les deux arêtes 10, 11 soient confondues, les deux cavaliers 28, 29 sont disposés sur les deux brides 21, 22 et les vis reliant les deux cavaliers sont vissées pour tendre à rapprocher les deux cavaliers. L'emboîtement conique des deux brides dans les gorges des cavaliers entraîne, de façon connue, la décomposition des forces exercées par les moyens 35 tendant à rapprocher les cavaliers perpendiculairement à l'axe 3. L'une de ces composantes constitue les forces antagonistes 20-1 et 20-2 s'appliquant sensiblement sur tout le pourtour des brides 21, 22, par l'intermédiaire de leur face oblique 23, 24. Ces forces tendent à rapprocher les deux embouts 1, 2 jusqu'à ce que se produise, au niveau des arêtes 10, 11, la liaison moléculaire et donc le raccordement étanche comme défini ci-avant et comme schématiquement représenté à grande échelle sur la figure 8.

L'intensité des forces à appliquer notamment via les vis 35 pour obtenir le résultat défini ci-dessus pour le raccordement selon l'invention peut être déterminé expérimentalement pour chaque type d'embout, par exemple en vissant les vis 35 au moyen d'une clé dynamométrique ou analogue.

Dans une réalisation préférentielle, le système comporte en outre des moyens pour protéger les extrémités 6, 7 des deux embouts 1, 2, et plus particulièrement les arêtes 10, 11 des biseaux 8, 9, contre des chocs ou analogues lors de la manipulation des embouts et éviter que le fil des biseaux ne s'émousse et ne permette plus alors d'obtenir la continuité des canaux avec une étanchéité comme décrit ci-dessus.

Ces moyens de protection des arêtes 10, 11 sont constitués, comme plus particulièrement illustré sur les figures 5 et 7, par deux bagues de protection 41, 42 entourant chacune un embout 1, 2, et des moyens 43 pour maintenir chaque bague 41, 42 autour de chaque embout 1, 2 de façon que, avant que les deux embouts soient aboutés, fig. 7, chaque bague 41, 42 dépasse de l'extrémité 6, 7 de l'embout à laquelle elle est associée, d'une quantité déterminée **q**. Ces bagues 41, 42 sont réalisées dans un second matériau ayant une élasticité de compression supérieure à celle du premier matériau. Elles ont une hauteur **h** et, de préférence, un diamètre intérieur égal au diamètre extérieur **D** des deux embouts 1, 2.

Les moyens 43 pour maintenir chaque bague 41, 42 autour de chaque embout 1, 2 de façon que, avant que les deux embouts soient aboutés, chaque bague dépasse de l'extrémité 6, 7 de l'embout à laquelle elle est associée, d'une quantité déterminée **q**, sont constitués par un épaulement circulaire 44, 45 réalisé sur chaque embout, la distance **p** séparant l'épaulement 44, 45 du plan 46, figure 7, perpendiculaire à l'axe de révolution 3 et passant par l'arête 10, 11 du biseau 8, 9 étant égale à **h** - **q**.

Il est de plus avantageusement possible que chaque épaulement 44, 45 soit constitué par le fond d'une rainure annulaire 46, 47 centrée sur l'axe de révolution 3, et même de façon préférentielle que ces deux rainures annulaires 46, 47 soient respectivement réalisées dans chaque bride 21, 22, la profondeur **r**, figure 7, de chaque rainure 46, 47 étant alors inférieure à la distance **p**.

Il est également avantageux que les deux bagues 41, 42 présentent une configuration géométrique permettant une augmentation de leur déformation élastique par compression. Sur les figures, cette configuration géométrique est illustrée par un rétrécissement de la partie des bagues qui se trouve dans le fond des rainures. La configuration géométrique qui a été illustrée n'est cependant qu'un exemple de réalisation et il est bien évident que d'autres formes peuvent être données aux bagues pour réaliser la fonction définie ci-dessus.

De même, il est avantageux que, dans le but de faciliter l'aboutement des deux embouts comme explicité ci-dessus, le système de raccordement comporte en outre des moyens 50 pour maintenir coaxiaux les deux embouts 1, 2 lorsque l'on procède à leur aboutement.

Dans une réalisation possible, ces moyens 50 sont constitués par un manchon cylindrique 51 ayant un diamètre intérieur égal au diamètre des deux brides 21, 22 pris au niveau de la petite base 34 de la section trapézoïdale 26 de la couronne 25, une longueur inférieure à la petite base 34 de la section trapézoïdale 26 de la couronne et supérieure à la distance séparant les deux brides 21, 22 quand les deux embouts 1, 2 sont aboutés, et une épaisseur inférieure à la distance minimale séparant les deux petites bases 34, 33 des sections trapézoïdales 26, 31 respectivement de la couronne 25 et de la gorge 30 quand les cavaliers 28, 29 sont montés par emboîtement femelle-mâle sur les deux brides 21, 22.

De plus et avantageusement, pour permettre de tester l'étanchéité du système de raccordement selon l'invention, par exemple sous une pression d'hélium et afin d'éviter que les bagues 41, 42 et le manchon 51 ne fassent écran aux fuites d'hélium, si elles existent, pendant un temps trop long, le système comporte des moyens de mise en communication fluidique de l'espace compris entre les deux extrémités 6, 7 des embouts 1, 2 et l'espace extérieur au manchon 51, ces moyens de communication traversant d'une part au moins l'une des deux bagues 41, 42, de préférence les deux pour des raisons de symétrie et donc de coût de fabrication, et d'autre part le manchon 51.

Dans une réalisation possible et avantageuse, ces moyens de communication sont constitués par une fente transversale réalisées dans les bagues et un orifice réalisé dans la partie du manchon qui se trouve, en finale après raccordement des deux embouts, entre les deux brides 21, 22. Ces moyens n'ont pas été illustrés dans un simple souci de simplification des dessins, et aussi parce qu'ils ne présentent pas de difficulté de réalisation par un homme du métier.

Il est bien précisé que les embouts peuvent être de différentes formes, de différentes tailles, qu'ils peuvent être rapportés sur des tubes par différents procédés, qu'ils peuvent être réalisés dans différents matériaux, et que les brides pourront être, soit rapportées sur ces embouts soit réalisées en une seule pièce avec les embouts. Quant aux bagues, elles pourront par exemple être réalisées, quand les embouts et les brides sont en acier ou analogue, en un matériau comme du polytétrafluoréthylène ou analogue.

## Revendications

1. Système de raccordement de deux embouts (1, 2) de tubes de révolution autour d'un axe (3), d'un diamètre extérieur de valeur **D** et comportant chacun un canal intérieur longitudinal (4, 5) d'un diamètre de valeur **d** inférieure à la valeur **D,** les embouts étant réalisés dans un premier matériau, le raccordement de ces deux embouts se faisant par leurs extrémités (6, 7) pour ne former, avec les deux canaux (4, 5), qu'un seul canal étanche, l'extrémité (6, 7) de chaque embout (1, 2) étant conformée en biseau annulaire (8, 9) centré sur l'axe (3), les deux arêtes circulaires (10, 11), respectivement des deux biseaux (8, 9), étant définies sur la surface (12) de la paroi (13, 14) des canaux (4, 5) des embouts (1, 2) et ayant un diamètre de valeur **d**, les deux embouts (1, 2) étant aboutés de facon que les deux arêtes circulaires (10, 11) soient au contact l'une de l'autre et confondues, ledit système de raccordement comportant des moyens (20) pour appliquer des forces antagonistes, respectivement sur chaque embout (1, 2) lorsqu'ils sont aboutés par les deux arêtes circulaires (10, 11) au contact l'une de l'autre et confondues, cesdits derniers moyens (20) étant agencés de façon qu'il se produise une liaison moléculaire dans la matière au niveau des deux arêtes (10, 11) pour assurer une étanchéité du canal unique qui se forme avec les deux canaux (4, 5) des deux embouts ainsi raccordés, **caractérisé par le fait que** les moyens (20) pour appliquer des forces antagonistes sur les embouts (1, 2) aboutés comportent :
- une bride (21, 22) sensiblement annulaire de révolution située sur chaque embout (1, 2), la face (23, 24) de chaque bride la plus éloignée de l'extrémité (6, 7) de l'embout auquel la bride est associée étant oblique par rapport à l'axe (3), les deux brides (21, 22) définissant, quand les deux embouts sont aboutés, une couronne annulaire (25, fig. 6) en deux parties espacées l'une de l'autre, cette couronne ayant une section axiale en forme de trapèze isocèle (26, fig.6) dont la grande base (27) est située sur la paroi latérale des deux embouts,
- au moins deux cavaliers (28, 29), chaque cavalier comportant une gorge annulaire (30) définie dans un plan axial, la section (31, fig.6) de ladite gorge étant sensiblement complémentaire de la section trapézoïdale (26, fig.6) de la couronne (25), la section trapézoïdale (31) de cette gorge (30) ayant une grande base (32) inférieure à la grande base (27) de la section trapézoïdale (26) de la couronne (25) et une petite base (33) inférieure à la petite base (34) de cette même section trapézoïdale (26) de la couronne (25), et
- des moyens (35) pour appliquer des forces opposées respectivement sur les deux cavaliers (28, 29) pour tendre à les rapprocher l'un de l'autre suivant une direction perpendiculaire à l'axe de révolution (3) lorsqu'ils sont montés par emboîtement femelle-mâle sur la couronne (25) définie par les deux brides (21, 22).

2. Système de raccordement selon la revendication 1, **caractérisé par le fait qu'**il comporte en outre des moyens (50) pour maintenir coaxiaux les deux embouts (1, 2) lors de leur aboutement.

3. Système de raccordement selon l'une des revendications 1 et 2, **caractérisé par le fait qu'**il comporte en outre deux bagues de protection (41, 42) entourant chacune un embout (1, 2), et des moyens (43) pour maintenir chaque bague (41, 42) autour de chaque embout (1, 2) de façon que, avant que les deux embouts soient aboutés (fig. 7), chaque bague (41, 42) dépasse de l'extrémité (6, 7) de l'embout à laquelle elle est associée, d'une quantité déterminée **q**, les bagues (41, 42) étant réalisées dans un second matériau ayant une élasticité de compression supérieure à celle du premier matériau.

4. Système de raccordement selon la revendication 3, **caractérisé par le fait que**, lorsque les bagues (41, 42) ont un diamètre intérieur égal au diamètre extérieur **D** des deux embouts (1, 2) et une hauteur **h** définie selon la direction axiale, les moyens (43) pour maintenir chaque bague (41, 42) autour de chaque embout (1, 2) de façon que, avant que les deux embouts soient aboutés, chaque bague dépasse de l'extrémité (6, 7) de l'embout à laquelle elle est associée, d'une quantité déterminée g, sont constitués par un épaulement circulaire (44, 45 ) réalisé sur chaque embout, la distance **p** séparant l'épaulement (44, 45) du plan (46, fig.7) perpendiculaire à l'axe de révolution (3) de l'embout (1, 2) et passant par l'arête (10, 11) du biseau (8, 9) étant égale à **h** - **q**.

5. Système de raccordement selon la revendication 4, **caractérisé par le fait que** chaque épaulement (44, 45) est constitué par le fond d'une rainure annulaire (46, 47) centrée sur l'axe de révolution (3).

6. Système de raccordement selon les revendications 1 et 4, **caractérisé par le fait que** les deux rainures annulaires (46, 47) sont respectivement réalisées dans chaque bride (21, 22), la profondeur **r** (fig. 7) de chaque rainure (46, 47) étant inférieure à la distance **p**.

7. Système de raccordement selon l'une des revendications 2 à 6, **caractérisé par le fait que** les moyens (50) pour maintenir coaxiaux les deux embouts (1, 2) lors de leur aboutement sont constitués par un manchon cylindrique (51) ayant :
- un diamètre intérieur égal au diamètre des deux brides (21, 22) pris au niveau de la petite base (34) de la section trapézoïdale (26) de la couronne (25),
- une longueur inférieure à la petite base (34) de la section trapézoïdale (26) de la couronne et supérieure à la distance séparant les deux brides (21, 22) quand les deux embouts (1, 2) sont aboutés, et
- une épaisseur inférieure à la distance minimale séparant les deux petites bases (34, 33) des sections trapézoïdales (26, 31) respectivement de la couronne (25) et de la gorge (30) quand les cavaliers (28, 29) sont montés par emboîtement femelle-mâle sur les deux brides (21, 22).

8. Système de raccordement selon l'une des revendications 1 à 7, **caractérisé par le fait que** l'angle au sommet (α, fig. 7) de chaque biseau (8, 9) est de l'ordre de quatre-vingt-neuf degrés.

9. Système de raccordement selon les revendications 3 et 7, **caractérisé par le fait qu'**il comporte des moyens de mise en communication de l'espace compris entre les deux extrémités (6, 7) des deux embouts (1, 2) et l'espace extérieur au manchon (51), lesdits moyens de communication traversant au moins l'une des bagues (41, 42) et le manchon (51).

## Claims

1. A system for connecting together two endpieces (1, 2) of tubes that are circularly symmetrical about an axis (3), having an outside diameter of value D and each having a longitudinally-extending inside bore (4, 5) of diameter of value d less than the value D, the endpieces being made of a first material, the two endpieces being connected together via their ends (6, 7) so that the two bores (4, 5) together form a single leaktight bore, the end (6, 7) of each endpiece (1, 2) being shaped with an annular chamfer (8, 9) centered on the axis (3), the two circular edges (10, 11) of the two respective chamfers (8, 9) being defined on the surfaces (12) of the walls (13, 14) of the bores (4, 5) of the endpieces (1, 2) and having a diameter of value d, the two endpieces (1, 2) being placed together end to end in such a manner that the two circular edges (10, 11) are in contact with each other and coincide, said connection system comprising means (20) for applying antagonistic forces respectively to each of the endpieces (1, 2) when they are end to end via the two circular edges (10, 11) contacting each other and coinciding, said means (20) being arranged in such a manner that a molecular bond is produced in the material at the two edges (10, 11) so as to provide leakproofing to the single bore that is formed by the two bores (4, 5) of the two endpieces connected together in this way, the system being **characterized by** the fact that the means (20) for applying antagonistic forces to the end-to-end endpieces (1, 2) comprise:
- a substantially circularly annular flange (21, 22) situated on each endpiece (1, 2), the face (23, 24) of each flange that is further from the end (6, 7) of the endpiece with which the flange is associated being oblique relative to the axis (3), the two flanges (21, 22) together defining, when the two endpieces are end to end, an annular bead (25, Figure 6) comprising two spaced-apart portions, said bead having an axial section in the form of an isosceles trapezium (26, Figure 6) whose large base (27) is situated on the side walls (26) of the two endpieces;
- at least two clips (28, 29), each clip having an annular channel (30) defined in an axial plane, the section (31, Figure 6) of said channel being substantially complementary to the trapezoidal section (26, Figure 6) of the bead (25), the trapezoidal section (31) of the channel (30) having a large base (32) smaller than the large base (27) of the trapezoidal section (26) of the bead (25), and a small base (33) smaller than the small base (34) of said trapezoidal section (26) of the bead (25); and
- means (35) for applying opposing forces to the two clips (28, 29) respectively tending to cause them to move towards each other in a direction perpendicular to the axis of symmetry (3) when they are mounted by female-male engagement on the bead (25) defined by the two flanges (21, 22).

2. A connection system according to claim 1, **characterized by** the fact that it further comprises means (50) for maintaining the two endpieces (1, 2) on the same axis while they are being brought into end-to-end contact.

3. A connection system according to claim 1 or claim 2, **characterized in that** it further includes two protective rings (41, 42) each surrounding one of the endpieces (1, 2), and means (43) for maintaining each ring (41, 42) about each endpiece (1, 2) in such a manner that prior to the two endpieces being brought into end-to-end contact (Figure 7), each ring (41, 42) extends beyond the end (6, 7) of the endpiece with which it is associated by a determined amount q, the rings (41, 42) being made of a second material having elasticity in compression that is greater than that of the first material.

4. A connection system according to claim 3, **characterized by** the fact that when the rings (41, 42) are of inside diameter equal to the outside diameter D of the two endpieces (1, 2) and of height h defined in the axial direction, the means (43) for maintaining each ring (41, 42) about each endpiece (1, 2) so that each ring projects beyond the end (6, 7) of the endpiece with which it is associated by a determined amount q prior to the two endpieces being brought into end-to-end contact, are constituted by respective circular shoulders (44, 45) formed on each endpiece, the distance p between the shoulder (44, 45) and the plane (46, Figure 7) perpendicular to the axis of symmetry (3) of the endpiece (1, 2) and containing the edge (10, 11) of the chamfer (8, 9) being equal to h - q.

5. A connection system according to claim 4, **characterized by** the fact that each shoulder (44, 45) is constituted by the bottom of an annular groove (46, 47) centered on the axis of symmetry (3).

6. A connection system according to claims 1 and 4, **characterized by** the fact that the two annular grooves (46, 47) are formed respectively in each of the flanges (21, 22) with the depth r (Figure 7) of each groove (46, 47) being less than the distance p.

7. A connection system according to any one of claims 2 to 6, **characterized by** the fact that the means (50) for maintaining the two endpieces (1, 2) on the same axis while they are being put into end-to-end contact are constituted by a cylindrical sleeve (51) having:
- an inside diameter equal to the diameter of the two flanges (21, 22) taken in the small base (34) of the trapezoidal section (26) of the bead (25);
- a length shorter than the small base (34) of the trapezoidal section (26) of the bead and greater than the distance between the two flanges (21, 22) when the two endpieces (1, 2) are in end-to-end contact; and
- thickness less than the minimum distance between the two small bases (34, 33) of the trapezoidal sections (26, 31) respectively of the bead (25) and of the channel (30) when the clips (28, 29) are mounted by female-male engagement on the two flanges (21, 22).

8. A connection system according to any one of claims 1 to 7, **characterized by** the fact that the angle at the apex (α, Figure 7) of each chamfer (8, 9) is about eighty-nine degrees.

9. A connection system according to claims 3 and 7, **characterized by** the fact that it includes means for putting the space between the two ends (6, 7) of the two endpieces (1, 2) into communication with the space outside the sleeve (51), said communication means passing through at least one of the rings (41, 42) and the sleeve (51).

## Patentansprüche

1. System zum Verbinden von zwei Anschlussstücken (1, 2) von zu einer Achse (3) rotationssymmetrischen Rohren, die einen Außendurchmesser mit Wert **D** besitzen und jeweils einen longitudinalen Innenkanal (4, 5) mit einem Durchmesser mit Wert **d**, der kleiner als der Wert **D** ist, umfassen, wobei die Anschlussstücke aus einem ersten Werkstoff hergestellt sind, wobei die Verbindung dieser zwei Anschlussstücke durch ihre Enden (6, 7) erfolgt, um mit den zwei Kanälen (4, 5) nur einen einzigen dichten Kanal zu bilden, wobei das Ende (6, 7) jedes Anschlussstücks (1, 2) eine ringförmige Anfasung (8, 9) besitzt, die auf die Achse (3) zentriert ist, wobei die zwei kreisförmigen Kanten (10, 11) der zwei Anfasungen (8, 9) auf der Oberfläche (12) der Wand (13, 14) der Kanäle (4, 5) der Anschlussstücke (1, 2) definiert sind und einen Durchmesser mit Wert **d** besitzen, wobei die zwei Anschlussstücke (1, 2) in der Weise zusammengefügt sind, dass die zwei kreisförmigen Kanten (10, 11) in gegenseitigem Kontakt sind und zur Deckung kommen, wobei das Verbindungssystem Mittel (20) umfasst, die auf die entsprechenden Anschlussstücke (1, 2) entgegengesetzte Kräfte ausüben, wenn diese an ihren zwei kreisförmigen Kanten (10, 11), die in gegenseitigem Kontakt sind und deckungsgleich sind, zusammengefügt sind, wobei diese letzteren Mittel (20) in der Weise beschaffen sind, dass sie in dem Material auf Höhe der zwei Kanten (10, 11) eine molekulare Verbindung erzeugen, um eine Dichtigkeit des einzigen Kanals, der durch die zwei Kanäle (4, 5) der zwei somit verbundenen Anschlussstücke gebildet wird, zu gewährleisten, **dadurch gekennzeichnet, dass** die Mittel (20) für die Ausübung der entgegengesetzten Kräfte auf die zusammengefügten Anschlussstücke (1, 2) umfassen:
- einen im Wesentlichen ringförmigen, rotationssymmetrischen Flansch (21, 22), der sich auf jedem Anschlussstück (1, 2) befindet, wobei die Fläche (23, 24) jedes Flansches, die von dem Ende (6, 7) des Anschlussstückes, dem der Flansch zugeordnet ist, am weitesten entfernt ist, in Bezug auf die Achse (3) schräg orientiert ist, wobei die zwei Flansche (21, 22) dann, wenn die zwei Anschlussstücke zusammengefügt sind, einen ringförmigen Kranz (25, Fig. 6) aus zwei voneinander beabstandeten Teilen definieren, der einen axialen Querschnitt in Form eines gleichschenkligen Trapezes (26, Fig. 6) hat, dessen große Basis (27) sich auf der Seitenwand der zwei Anschlussstücke befindet,
- wenigstens zwei Reiter (28, 29), wovon jeder eine ringförmige Nut (30), die in einer axialen Ebene definiert ist, aufweist, wobei der Querschnitt (31, Fig. 6) der Nut zu dem trapezförmigen Querschnitt (26, Fig. 6) des Kranzes (25) im Wesentlichen komplementär ist, wobei der trapezförmige Querschnitt (31) dieser Nut (30) eine große Basis (32) besitzt, die kleiner als die große Basis (27) des trapezförmigen Querschnitts (26) des Kranzes (25) ist, und eine kleine Basis (33) besitzt, die kleiner als die kleine Basis (34) des trapezförmigen Querschnitts (26) des Kranzes (25) ist, und
- Mittel (35), die jeweils entgegengesetzte Kräfte auf die beiden Reiter (28, 29) ausüben, um diese in einer zu der Rotationssymmetrieachse (3) senkrechten Richtung zu einer Annäherung zu veranlassen, wenn sie durch Buchsen/Stecker-Einfügung auf dem durch die beiden Flansche (21, 22) definierten Kranz (25) angebracht sind.

2. Verbindungssystem nach Anspruch 1, **dadurch gekennzeichnet, dass** es außerdem Mittel (50) umfasst, die die beiden Anschlussstücke (1, 2) koaxial halten, wenn sie zusammengefügt sind.

3. Verbindungssystem nach einem der Ansprüche 1 und 2, **dadurch gekennzeichnet, dass** es außerdem zwei Schutzreife (41, 42), die jeweils ein Anschlussstück (1, 2) umgeben, sowie Mittel (43) aufweist, die jeden Reif (41, 42) um jedes Anschlussstück (1, 2) in der Weise halten, dass sich jeder Reif (41, 42) vor der Zusammenfügung der zwei Anschlussstücke (Fig. 7) um eine bestimmte Größe **q** über das Ende (6, 7) des Anschlussstücks, dem er zugeordnet ist, bewegt, wobei die Reife (41, 42) aus einem zweiten Werkstoff verwirklicht sind, der eine Kompressionselastizität besitzt, die höher als jene des ersten Werkstoffs ist.

4. Verbindungssystem nach Anspruch 3, **dadurch gekennzeichnet, dass** die Mittel (43), die jeden Reif (41, 42) um jedes Anschlussstück (1, 2) in der Weise halten, dass sich jeder Reif vor der Zusammenfügung der zwei Anschlussstücke um eine bestimmte Größe (**q**) über das Ende (6, 7) des Anschlussstücks, dem er zugeordnet ist, bewegt, dann, wenn die Reife (41, 42) einen Innendurchmesser besitzen, der gleich dem Außendurchmesser **D** der zwei Anschlussstücke (1, 2) ist, und eine in axialer Richtung definierte Höhe **h** besitzen, durch eine kreisförmige Schulter (44, 45) gebildet sind, die an jedem Anschlussstück verwirklicht ist, wobei der Abstand **p**, der die Schulter (44, 45) von der Ebene (46, Fig. 7) trennt, die zu der Rotationssymmetrieachse (3) des Anschlussstücks (1, 2) senkrecht ist und durch die Kante (10, 11) der Anfasung (8, 9) verläuft, gleich **h** - **q** ist.

5. Verbindungssystem nach Anspruch 4, **dadurch gekennzeichnet, dass** jede Schulter (44, 45) durch den Boden einer ringförmigen Rinne (46, 47) gebildet ist, die auf die Rotationssymmetrieachse (3) zentriert ist.

6. Verbindungssystem nach den Ansprüchen 1 und 4, **dadurch gekennzeichnet, dass** die zwei ringförmigen Rinnen (46, 47) jeweils in einem der Flansche (21, 22) verwirklicht sind, wobei die Tiefe **r** (Fig. 7) jeder Rinne (46, 47) kleiner als der Abstand **p** ist.

7. Verbindungssystem nach einem der Ansprüche 2 bis 6, **dadurch gekennzeichnet, dass** die Mittel (50), die die zwei Anschlussstücke (1, 2) bei ihrer Zusammenfügung koaxial halten, durch eine zylindrische Muffe (51) gebildet sind, die:
- einen Innendurchmesser besitzt, der gleich dem Durchmesser der zwei Flansche (21, 22) auf Höhe der kleinen Basis (34) des trapezförmigen Querschnitts (26) des Kranzes (25) ist,
- eine Länge besitzt, die kleiner als die kleine Basis (34) des trapezförmigen Querschnitts (26) des Kranzes ist und größer als der Abstand ist, der die beiden Flansche (21, 22) trennt, wenn die zwei Anschlussstücke (1, 2) zusammengefügt sind, und
- eine Dicke besitzt, die kleiner als der minimale Abstand ist, der die zwei kleinen Basen (34, 33) der trapezförmigen Querschnitte (26, 31) des Kranzes (25) bzw. der Nut (30) trennt, wenn die Reiter (28, 29) durch Buchsen/Stecker-Einfügung an den zwei Flanschen (21, 22) angebracht sind.

8. Verbindungssystem nach einem der Ansprüche 1 bis 7, **dadurch gekennzeichnet, dass** der Spitzenwinkel (α , Fig. 7) jeder Anfasung (8, 9) in der Größenordnung von neunundachtzig Grad liegt.

9. Verbindungssystem nach den Ansprüchen 3 und 7, **dadurch gekennzeichnet, dass** es Mittel aufweist, die eine Verbindung zwischen dem Raum, der zwischen den zwei Enden (6, 7) der zwei Anschlussstücke (1, 2) vorhanden ist, und dem Raum außerhalb der Muffe (51) herstellen, wobei die Verbindungsherstellungsmittel durch die Reife (41, 42) und/oder die Muffe (51) verlaufen.
